# EUROPEAN PATENT APPLICATION

(11) **EP 0 856 979 A2**
(43) Date of publication of application: **05.08.1998**
(21) Application number: 98100792.5
(22) Date of filing: 19.01.1998
(51) Int. Cl.: H04M 3/50, H04M 3/48

(54) **Apparatus and method for detecting information from a voice message**

(30) Priority: 03.02.1997 US 794297
(71) Applicant: Siemens Business Communication Systems, Inc., Santa Clara, CA 95054 (US)
(72) Inventor: King, Neal J., Oakland, CA 94610 (US); Sassin, Michael, San Jose, CA 95126 (US); Aktas, Christoph, Sunnyvale, CA 94086 (US)
(74) Representative: Allen, Derek

(57) **Abstract**

A method and an apparatus for automatically storing a specific item of information included in a message stored in a voice mail system is disclosed. The voice mail system is connected to a signal recognition system. The system provides the following steps: A message is recorded;a predetermined key signal in said message is detected manually or automatically; a signal transformation into a digital signal using said signal recognition system is started; and the transformed digital signal is stored and can be used for a call return.

## Description

### Background

The present invention concerns an apparatus and a method for storing information included in a message stored in a voice mail system.

Current voice mail systems allow a user to answer a message left on his 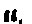 voice mailbox" by initiating a RETURN-CALL function, if the phone from which the call was made is also served by the same switch or PBX. This RETURN-CALL function may be initiated by pressing a specific key or key combination. But such a system doesn't allow the user to store information which is part of a voice mail message. This information can be in particular a telephone number or other important data.

To store information, e.g. a telephone number, known systems often have a structured script for the interactive voice response (IVR) unit, which forces the caller to leave information in a specific format. For example this format can be "What is your name? what is your phone number? Please leave a message 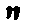 etc.

Another known system comprises an arrangement between the switch/PBX and the voice mail system, whereby the switch knows the number of the caller, and delivers this to the voice mail system, which inserts this number in the header of the voice message. The voice mail system may then have to place digits such as "9" or "9-I" in front of the actual number to allow access to an outside trunk. Nevertheless no Return-Call function is possible if the caller identification is not available, blocked or otherwise not provided.

To get a number out of a voice mail message, the user has to listen, write down, and dial directly the spoken number. This takes time, and may be inaccurate. There are methods for improving the accuracy, such as volume control and a 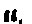 slow down" function, so the message can be heard more clearly, but this is still inconvenient and takes time.

The disadvantage of a scripted IVR is that the user still must copy down the number and dial it. In addition, the scripted IVR is not flexible enough for many business settings.

The limitations of depending on ANI are that: firstly it can be blocked (e.g. in California); and secondly, in some circumstances, the number that is delivered identifies only a trunk, and not a telephone.

### Summary of the invention

It is an object of the invention to provide a method and an apparatus to transform at least a specific part of a voice message stored in a voice mail system into a digital code, for example, a textual representation as ASCII. A further object of the invention is to use this digital code which stands for a respective telephone number to make a return call.

This object is accomplished using a signal recognition system triggered by a predetermined start signal, which transforms the specific information into a digital code and stores it in a special memory.

The specific information can be any telephone number(s) which should be used to return the call. The information can also be any other information of importance, such as names, specific data, addresses, etc. which can be transferred later to a connected computer system for further processing.

In case of extracting a telephone number, in a further embodiment this digital code can be used to extend this function to a return call function by allowing the user to return calls to messages left by phones not served by the same switch.

### Brief description of the drawings

Figure 1 displays a schematic block diagram according to the present invention,
Figure 2 illustrates a diagram showing a voice message and its transformation, and
Figure 3 displays a flow chart according to the preferred embodiment of the present invention.

### Description of the preferred embodiment

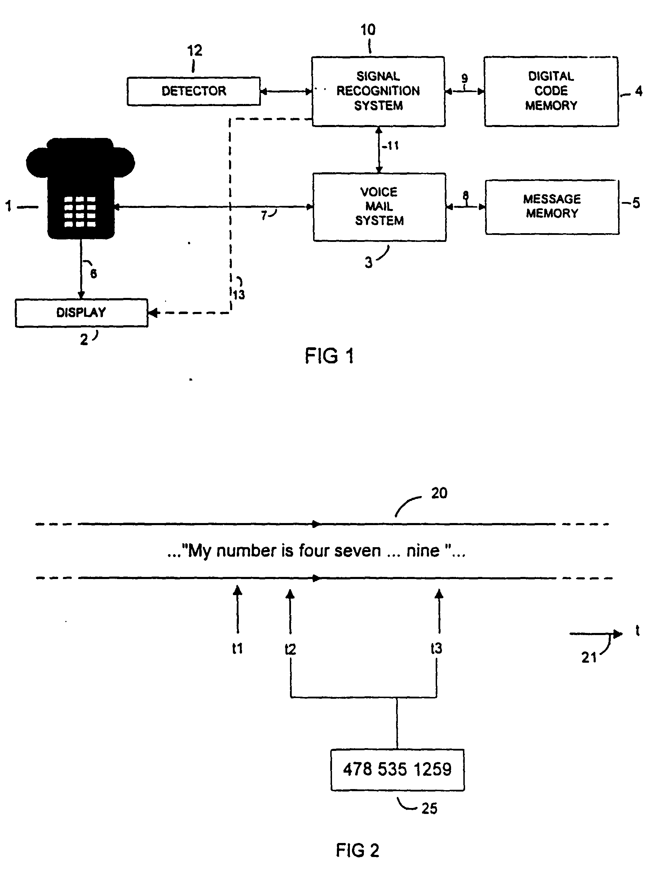

In figure 1, numeral 1 depicts a telephone set. A display 2 may be connected via line 6 to the telephone set, or the display may be incorporated into the telephone set. A voice mail system 3 is linked via connection 7 to said telephone set. The voice mail system may be incorporated in a switch or be part of the telephone set, etc. In one embodiment of the present invention, the voice mail system is a PhoneMail™ system sold by Siemens Business Communication Systems, Inc. The voice mail system may have at least one memory connected to it. In figure 1, two memories are shown, which can be part of a single memory associated with the voice mail system. The first memory 4 is connected to the voice mail system via a link 8 and is responsible for storing voice messages. The second memory 5 can be connected to a signal recognition system 10 via link 9 and is responsible for storing the transformed digital code. Further the signal recognition system 10, e.g. a speech recognition system, is connected to the voice mail system 3 via a link 11. This signal recognition system can include a detector 12 or it can be connected to a detector 12. The detector 12 is able to detect a certain predetermined start signal. The display 2 can alternatively be connected to the signal recognition system 10 via line 13 or be part of a computer system which may incorporate the complete system 3-12. The phone 1 itself can also be a phone/modem connected to the computer.

Figure 2 shows a schematic diagram wherein a recorded voice message is displayed on a virtual tape 20. The arrow 21 indicates the time direction. As an example, this message contains the sentence 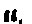 My number is four seven eight five three five one two five nine 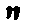 , whereby the word 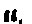 number 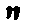 appears at the time t₁ and the actual number sequence starts at t₂ and ends at t₃. Numeral 25 depicts the numeric code into which the spoken sequence, beginning at t2 and ending at t3, is transformed by means of a speech recognition system. Although illustrated in a decimal format, the numeric code is preferably stored as a digital code.

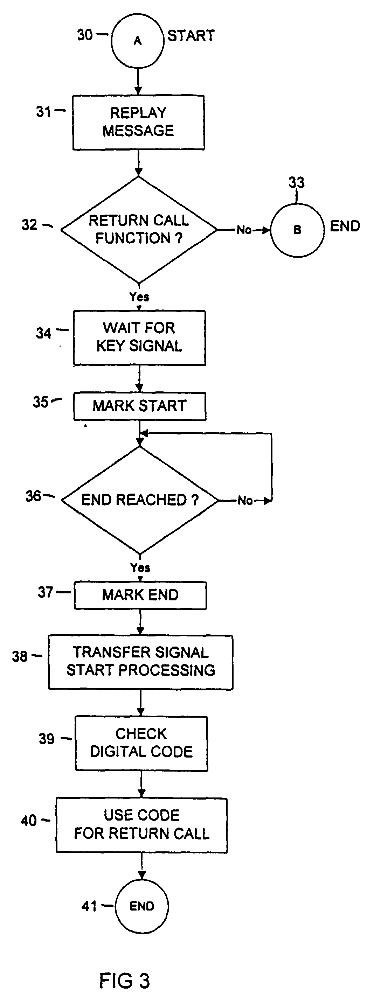

Hereinafter a specific embodiment of the present invention will be described with regard to figure 3 which shows a flow chart of a method of the present invention.

When a message has been recorded, and the user wants to play it back, the system starts at step 30 and replays the message at step 31. Having heard the message, and desiring to return the call, the user operates a function key or a specific combination of keys on the keypad of the telephone set, for example, to invoke a RETURN-CALL. A decision is made in step 32 whether this function has been activated or not. If not the system stops at step 33. Otherwise, because if there is no phone number attached to the message, the voice mail system will play the message back to the user and wait in step 34 for a start key signal. When the message reaches the point t₂ where the number is just about to be stated, the user presses a button/key to define the beginning of a voice clip. This indicates to the system in step 35 where the signal processing should be started. When the message reaches a point t₃ past the complete statement of the number, the user presses the same button to define in the steps 36, 37 the end of this voice clip. At step 38, the voice mail system 3 then forwards this clip to a speech recognition module 10, which analyzes it to pick out a string of digits 25. This string of digits 25 is stored in memory 5, then in step 39, the digits 25 are optionally read back to the user to confirm that this is the number to be dialed. The string of digits 25 can alternatively be presented to the user on the telephone display 2. If this number is confirmed by the user, by pressing a button, the voice mail system 3 prepends the appropriate digits, such as 9, (if needed) and sends the complete string of numbers to the switch/PBX for call setup in step 40. Alternatively, the voice mail system 3 can prepend the appropriate digits before obtaining confirmation by the user. This routine ends then in step 41.

This approach can be used for both external calls, in which case prepended digits will be required; or for internal calls, for cases in which the caller gives a non-internal number at which he can be reached. For example, if the caller calls from an
office phone (internal incoming call) but states that she can be reached later at a cellular phone number (external outgoing call), the speech clip of the statement of the cellular number can be captured by the speech recognition module, and sent to the switch/PBX for call set up.

To enhance identification of the stated number, certain expectations in the speech recognition unit can be turned on. For example, the speech recognition unit can be set up to look for a specific number of digits (7, 10 or 11)

A person of skill in the art will recognize that the embodiment described above can be modified in various ways to obtain other embodiments of the present invention. For example, instead of manually marking the begin and the end of a sequence, a real-time signal processing unit can be used to look for a key word or word sequence, such as for example 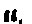 number 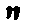 , or 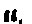 reach me at 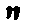 , etc., to indicate the beginning of the sequence. The end could then be automatically determined by any non-number word. Alernatively, the beginning of a number can be determined by applying natural language analysis techniques such as grammar based analysis. Such a system would not need a second replay of the message as stated above and therefore would be more efficient but also would need more computing power. The key word can also be no specific predetermined word, instead the first number in a number sequence could indicate the beginning of the sequence.

If there is more than one number sequence in a stored message, it is possible to separate them by depending on such verbal clues as "my number is 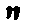 or grammatical clues, etc. Alternatively, the system can be extended so that it is able to detect multiple numbers such as phone number, fax number, or mobile phone number based on verbal clues such as "my phone number is ..", "my fax number is... 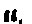 , or "my mobile phone number is ... 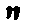 . This information can be used by invoking other features of the voice mail system, or as part of a Computer Telephony Integration.

To allow maximum user control, there is preferably an option for the user to over-ride an incorrectly identified digit, by entering an "editing" mode. In this editing mode, the numeric code can be displayed on the telephone display 2 and the keypad can be used to move a cursor and edit the displayed number. This will also enable the user to add or modify prepended digits for special situations.

A stored number stored in memory according to the present invention can also be automatically transferred to a personal electronic address book, a data bank, etc.

In another embodiment of the present invention, the signal recognition system 10 can be a dual tone multi-frequency decoder (DTMF), instead of a speech recognition system. The caller must then be informed in the header of a answering/greeting sequence to dial the telephone number or data information which should be stored or called. Thus, in a simple manner, numerical data can be collected. The system can also combine a dual tone multi-frequency decoder with a speech recognition system, so both kind of information can be detected.

In another embodiment of the present invention, the complete voice mail system is incorporated into a computer system, for example, a personal computer connected to a phone or having a phone/modem interface. This system runs a speech recognition program which translates the complete voice mail into a text file. This text file will then be shown on the display, for example, in a window on the monitor screen. The signal recognition system looks through this text for numbers and, for example, highlights all numbers found in the text. The user can simply click on these numbers, similar to the usage of an internet browser, to activate an automatic return call. The system could also send the numbers which have been detected to the phone display, so that these specific numbers are shown on the telephone display.

The embodiments described herein are merely illustrative of the principles of the present invention. Various modifications may be made thereto by persons ordinarily skilled in the art, without departing from the scope or spirit of the invention.

## Claims

1. A method for automatically storing a specific item of information included in a message stored in a voice mail system, the voice mail system being connected to a signal recognition system, the method comprising the steps of:
- Recording said message;
- Detecting a predetermined key signal in said message;
- Starting a signal transformation into a digital signal using said signal recognition system; and
- Storing said transformed digital signal.

2. A method as in claim 1, whereby the specific item of information is dual tone multi frequency encoded and the signal recognition system is a dual tone multi frequency encoder.

3. A method as in claim 1, whereby the specific item of information is a spoken number and the signal recognition system is a speech recognition system.

4. A method as in one of the preceding claims, whereby the transformed signal is a telephone number which is used to return an external phone call.

5. A method as in claim 4, whereby a prefix number is placed in front of the transformed telephone number.

6. A method for automatically storing a specific item of information included in a message stored in a voice mail system,the voice mail system being connected to a signal recognition system, the method comprising the steps of:
- Recording said message;
- After a manual input of a start signal, starting a signal transformation into a digital signal using said signal recognition system;
- Stopping said signal transformation after a manual input of a stop signal; and
- Storing said transformed digital signal.

7. A method as in claim 6, whereby the specific item of information is dual tone multi frequency encoded and the signal recognition system is a dual tone multi frequency encoder.

8. A method as in claim 6, whereby the specific item of information is a spoken number and the signal recognition system is a speech recognition system.

9. A method as in claims 6, 7 or 8, whereby the transformed signal is a telephone number which is used to return an external phone call.

10. A method as in claim 9, whereby a prefix number is placed in front of the transformed telephone number.

11. A method asin one of the preceding claims whereby the starting of the signal transformation is initiated after a manual input of a start signal.

12. A method as in claim 11, whereby the signal transformation stops after the entire item of information has been transformed.

13. A method as in claim 11, whereby the signal transformation stops after a predetermined time.

14. A method as in claim 11, whereby the signal transformation stops after a predetermined amount of recognized signs.

15. A method for automatically storing of at least one specific item of information included in a message stored in a voice mail system connected to a signal recognition system the method comprising the steps of:
- Recording said message;
- Transforming the message into digital coded text file;
- Detecting said items in said text file;
- Marking the items; and
- Storing said said items as digital signals.

16. A apparatus for automatically storing a specific item of information included in a message stored in a voice mail system connected to a signal recognition system, the apparatus comprising:
- a first memory, connected to the voice mail system for storing said specific item of information;
- a detector for detecting a predetermined key signal in said message,
- a signal recognition system connected to said voice mail system, wherein the signal recognition system transforms said specific item of information into a digital signal; and
- a second memory for storing said digital signal.

17. An apparatus as in claim 16, wherein said apparatus includes a return call system connected to said second memory, using said stored digital signal for returning the call.

18. An apparatus as in claim 16 or 17, wherein said signal recognition system is a speech recognition system which transforms a spoken number into a digital code.

19. An apparatus as in claim 16 or 17, wherein said signal recognition system is a dual tone multi frequency decoder which decodes a dual tone multi frequency code into a digital code.
